# EUROPEAN PATENT SPECIFICATION

(11) **EP 2 674 277 B1**
(45) Date of publication and mention of the grant of the patent: **08.10.2014**
(21) Application number: 13170237.5
(22) Date of filing: 03.06.2013
(51) Int. Cl.: B29C 45/78, B29C 45/74, B29C 45/76

(54) **Injection molding machine**
Spritzgießmaschine
Machine de moulage à injection

(30) Priority: 12.06.2012 JP 2012133264
(43) Date of publication of application: 18.12.2013
(73) Proprietor: SUMITOMO HEAVY INDUSTRIES, LTD., Tokyo 141-6025 (JP)
(72) Inventor: Mizuno, Hiroyuki, Kanagawa, 237-8555 (JP)
(74) Representative: HOFFMANN EITLE

(56) References cited:
- WO-A2-2007/090845
- JP-A- H1 058 506
- JP-A- H1 158 481

## Description

### BACKGROUND OF THE INVENTION

### 1. Field of the Invention

The present invention relates to an injection molding machine.

### 2. Description of the Related Art

Injection molding machines include an injection unit for injecting molten resin into a mold unit. The mold unit includes a stationary mold and a movable mold. A cavity is formed between the stationary mold and the movable mold when the mold unit is clamped.

The injection unit fills resin that is melted within a cylinder into the cavity formed in the mold unit via a nozzle that is arranged at the tip of the cylinder. After the resin within the cavity is cooled and solidified, the mold unit is opened to remove the solidified resin as a molding product.

The cylinder is divided into plural zones along its axial direction, and a heater and a temperature sensor are arranged in each zone. Further, a ratio of a conduction time to a predetermined cycle (e.g., one second) (duty ratio) is set for each heater so that the temperature within each zone may reach a corresponding target temperature, and a current may be applied to the heater at each zone according to the set duty ratio (See, e.g., PCT International Publication No. WO/2008/126906).

In the related art, conduction of the heaters at the plural zones are started at the same time, and as a result, a large amount of electric power is consumed at one time. Thus, protective circuits and power source capacities have to be selected to accommodate such a large peak power.

A further document is WO 2007/090845 A2 referring to a heating element temperature control system, wherein an extruder is provided along its longitudinal extension with band heaters, each comprising heating resistors. The electronic temperature control is integrated directly on the band heaters, thus integrating a heating function.

JP H11 58481 refers to a method for controlling a temperature in a heater for an injection molding machine. The difference between the set temperature value and the actually measured value of each of the zones at the point of time when the control initiating temperature is detected, is calculated and is stored in a storage part.

Further, reference is made to JP H10 58506 A referring to a method for controlling a power supply to a nozzle heater and a power supply controlling apparatus.

### SUMMARY OF THE INVENTION

It is a general object of at least one embodiment of the present invention to provide an injection molding machine that is capable of reducing the peak power.

In one embodiment of the present invention, an injection molding machine includes the features of independent claim 1.

### BRIEF DESCRIPTION OF THE DRAWINGS

FIG. 1 is a cross-sectional view of an exemplary injection unit of an injection molding machine according to an embodiment of the present invention;
FIG. 2 is a circuit diagram illustrating an exemplary configuration for controlling the temperature of a cylinder;
FIG. 3 illustrates controller operations of a first example and a first comparative example;
FIG. 4 illustrates controller operations of a second example and a second comparative example; and
FIG. 5 illustrates controller operations of a third example and a third comparative example.

### DETAILED DESCRIPTION OF THE PREFERRED EMBODIMENT

In the following, embodiments of the present invention are described with reference to the accompanying drawings. It is noted that identical or corresponding features illustrated in more than one of the drawings may be identified by the same reference numerals and their descriptions may be omitted. Also, in the following descriptions, it is assumed that a resin injection direction corresponds to a forward direction and the direction opposite the resin injection direction corresponds to a backward direction.

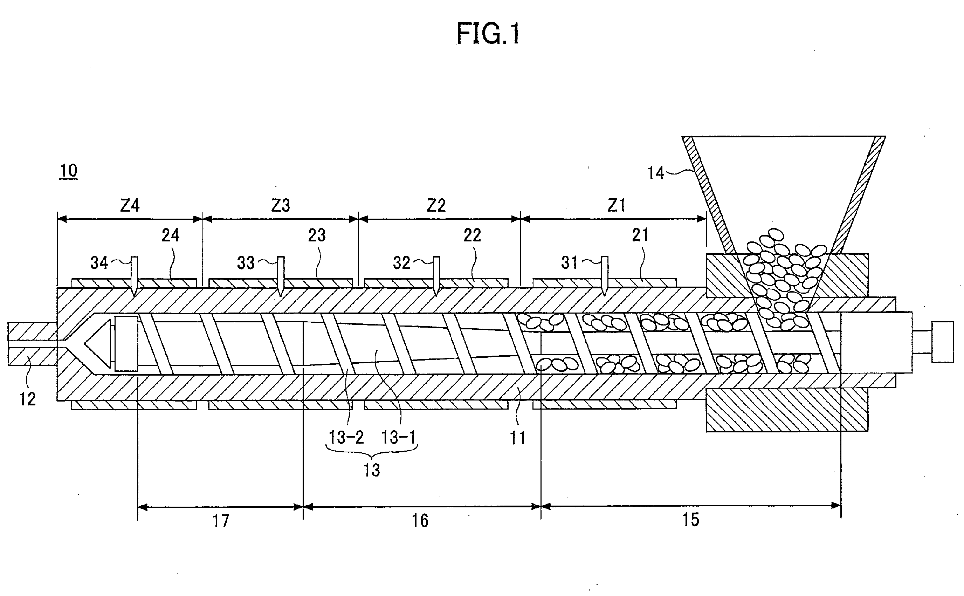

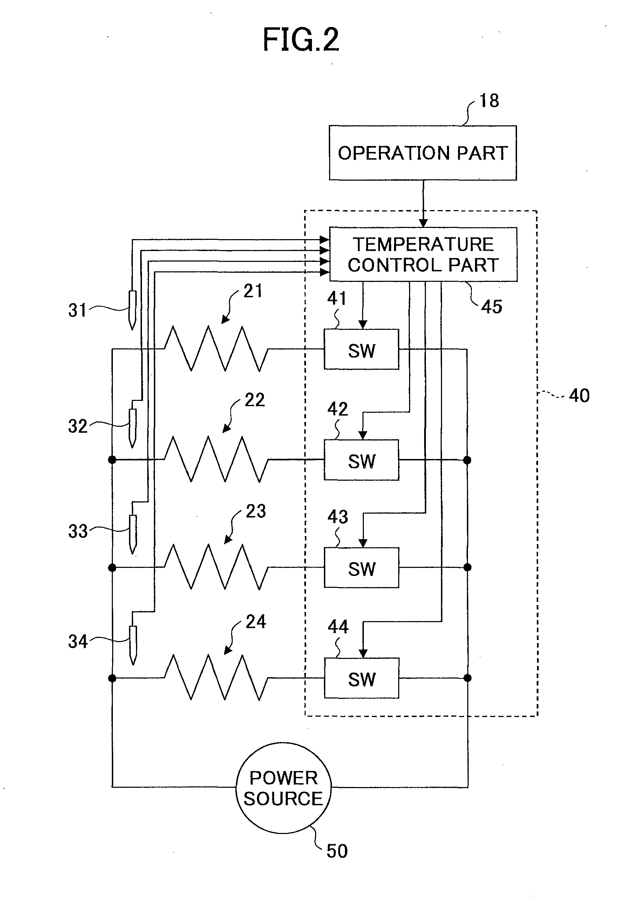

FIG. 1 is a cross-sectional view of an exemplary injection unit 10 of an injection molding machine according to an embodiment of the present invention. FIG. 2 is a circuit diagram illustrating an exemplary configuration for controlling the temperature of a cylinder 11.

The injection unit 10 is configured to inject molten resin into a mold unit (not shown). The mold unit includes a stationary mold and a movable mold. A cavity is formed between the stationary mold and the movable mold when the mold unit is clamped. The injection unit 10 injects resin that is melted within the cylinder 11 into the cavity formed in the mold unit via a nozzle 12 that is arranged at the tip of the cylinder 11. After the resin within the cavity is cooled and solidified, the mold unit is opened and the solidified resin is removed as a molding product.

The injection molding machine 10 includes a screw 13 that is arranged to be rotatable and movable in its axial directions inside the cylinder 11. The screw 13 includes a screw rotation shaft 13-1 and a flight 13-2 that forms a spiral along the periphery of the screw rotation shaft 13-1. Resin pellets (resin material) are supplied to one end of the screw 13 via a hopper 14. When the screw 13 rotates, the flight 13-2 of the screw 13 moves so that the resin pellets filled in a groove of the screw 13 may be transported from the hopper 14 side to the nozzle 12 side.

Plural heaters 21-24 that are configured to heat the cylinder 11 to predetermined temperatures are arranged at the outer periphery of the cylinder 11. The resin pellets moving in the forward direction within the cylinder 11 are heated by the heat from the heaters 21-24. The resin is gradually melted as it moves forward within the cylinder 11 and is completely melted by the time it reaches the tip of the heating cylinder 11. Then, the screw 13 moves backward as the melted resin is accumulated in front of the screw 13. After the screw 13 moves backward by a predetermined distance and a predetermined amount of resin is accumulated in front of the screw 13, the rotation of the screw 13 is stopped. Then, by moving the screw 13 forward while the rotation of the screw 13 is stopped, the molten resin is injected into the mold unit from the nozzle 12.

The screw 13 includes a supply part 15, a compression part 16, and a plasticizing part 17 arranged along the axial direction from the rear side (resin supply side) to the front side (nozzle side). The supply part 15 is where the resin is supplied and transported forward. The compression part 16 is where the supplied resin is compressed and melted. The plasticizing part 17 is where the melted resin is plasticized at predetermined amounts. The depth of the groove of the screw 13 is arranged to be relatively deep at the supply part 15, relatively shallow at the plasticizing part 17, and is arranged to become increasingly shallower toward the front side at the compression part 16.

The cylinder 11 is divided into plural (e.g., four) zones Z1-Z4 along its axial direction, and the heaters 21-24 are respectively arranged at the plural zones Z1-Z4. Electric power supplied to each of the heaters 21-24 is individually controlled, and the cylinder 11 is heated on a zone-by-zone basis. Each of the heaters 21-24 is arranged around the outer periphery of the cylinder 11. Although not shown, a heater may also be arranged around the outer periphery of the nozzle 12.

Additionally, temperature sensors (e.g., thermocouples) 31-34 are respectively arranged at the zones Z1-Z4. The tip of each of the temperature sensors 31-34 is buried in the cylinder 11. A detection signal of each of the temperature sensors 31-34 is input to a controller 40.

The controller 40 independently controls the electric power supplied to each of the heaters 21-24 based on a temperature deviation of a measured temperature of each of the temperature sensors 31-34 from its corresponding target temperature. For example, as illustrated in FIG. 2, the controller 40 may include switch circuits 41-44 for switching between cutting off and supplying electric power to the heaters 21-24 from a power source 50, and a temperature control part 45 for controlling the switch circuits 41-44.

The heaters 21-24 may be connected in parallel, for example, and the switch circuits 41-44 may be arranged for the heaters 21-24, respectively. In the illustrated example, the switch circuits 41-44 are serially connected to the heaters 21-24, respectively.

Each of the switch circuits 41-44 includes a switch such as a solid state relay that may be switched on/off according to a control signal (e.g., PWM signal) from the temperature control part 45 so that power supply operations may be switched between cutting off and supplying electric power to the corresponding heater 21-24.

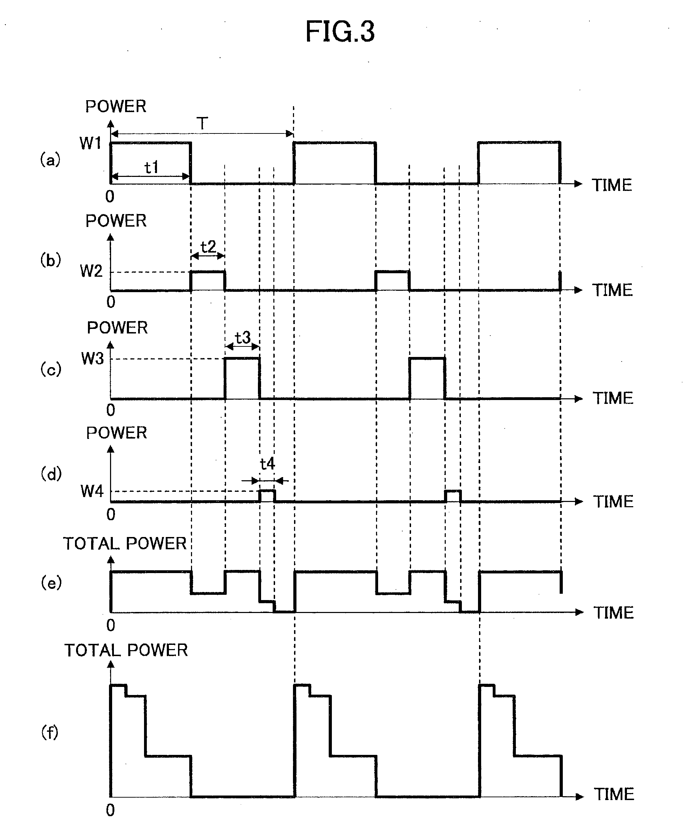

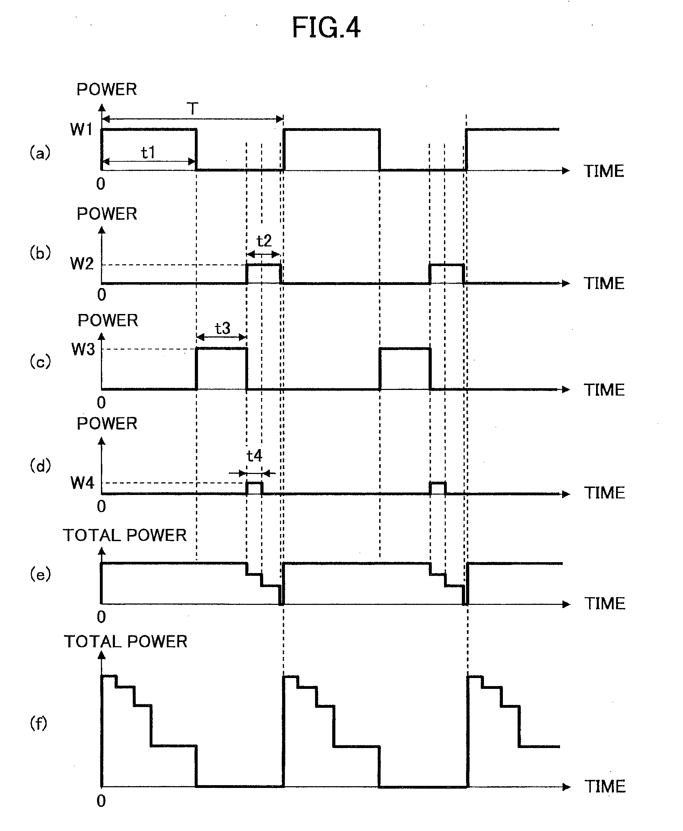

When the switch circuits 41-44 are turned on, voltages (or effective values in the case where alternating-current voltages are used) supplied to the corresponding heaters 21-24 do not have to be variable and may be fixed. In this case, electric power W1-W4 supplied for conduction of the heaters 21-24 (see FIGS. 3 and 4) may be determined by the resistance values of the heaters 21-24, for example. The greater the resistance values of the heaters 21-24, the harder it is for a current to flow through the heaters 21-24 and the smaller the electric power W1-W4 supplied to the heaters 21-24.

In FIG. 2, the power source 50 is an alternating-current (AC) source so that an alternating-current is supplied to the heaters 21-24 and the switch circuits 41-44. However, in other examples a direct current may be supplied as electric power to the above elements. In the case where a direction current is supplied as electric power to the switch circuits 41-44, each of the switch circuits 41-44 may include a transistor as a switch, for example.

The temperature control part 45 may comprise a microcomputer that includes a CPU and a memory, for example. The CPU of the temperature control part 45 may execute control programs stored in the memory to implement various functions of the temperature control part 45.

An operation part 15 (e.g., operation panel) that accepts an operation input made by a user and inputs an operation signal to the temperature control part 45 according to the input operation is connected to the temperature control part 45. The temperature control part 45 sets a target temperature based on the operation signal from the operation part 15. The target temperature may be set based on various factors such as the type of resin material used and the operation state of the injection molding machine (e.g., continuous molding operations or molding operations at rest).

The temperature control part 45 obtains a temperature deviation of a measured temperature at a measurement position of each of the temperature sensors 31-34 (i.e., at each of the zones Z1-Z4) from its corresponding target temperature. Based on the obtained temperature deviation, the temperature control part 45 performs an operation such as a PID (proportional, integration, and derivative) operation and sets, for each of the heaters 21-24, the ratio of a conduction time to a predetermined cycle (e.g., one second) (duty ratio) so that the corresponding temperature deviation may equal zero (0). It is noted that the conduction cycle of the heaters 21-24 may be the same. In the case where the electric power W1-W4 supplied to the heaters 21-24 is fixed, the greater the duty ratio of the conduction time of the heaters 21-24, the greater the amount of heat generation per time unit of the heaters 21-24. In this way, the temperature control part 45 compensates the temperature deviation at each zone.

The temperature control part 45 calculates the conduction time of a heater (e.g., heater 21) based on factors such as the temperature deviation or the amount of heat generation at the zone (e.g., zone Z1) in which the heater is arranged, the resistance value of the heater, and the capacity of the power source 50. It is noted that information such as the amount of heat generation at the zones Z1-Z4, the resistance value of the heaters 21-24, and the capacity of the power source 50 may be stored in a memory beforehand so that it may be retrieved and used to calculate the conduction time.

The temperature control part 45 may calculate the conduction time of the heaters 21-24 for each predetermined cycle. However, when the heaters 21-24 are at steady-state temperatures, the temperature control part 45 may calculate the conduction time of the heaters 21-24 for plural cycles. That is, when the heaters 21-24 are at steady-state temperatures, the conduction times of the heaters 21-24 do not have to be changed over plural cycles.

The temperature control part 45 generates control signals (e.g., PWM signals) indicating the calculated conduction times of the heaters 21-24 and inputs the generated control signals to the switch circuits 41-44. In turn, the switch circuits 41-44 are turned on/off according to the control signals from the temperature control part 45, and power supply operations are switched between cutting off and supplying electric power to the heaters 21-24 accordingly.

In the present embodiment, the temperature control part 45 not only calculates the conduction times of the heaters 21-24 but also calculates timings for switching between cutting off and supplying electric power to the heaters 21-24 and includes the calculated timings in the control signals. The switch circuits 41-44 are turned on/off during a predetermined periodic cycle according to the timings indicated in their corresponding control signals, and power supply operations are switched between cutting off and supplying electric power to the heaters 21-24 accordingly.

In this way, the controller 40 adjusts the timings for switching between cutting off and supplying electric power to the heaters 21-24 so that the total power supplied to the heaters 21-24 may be adjusted.

FIG. 3 illustrates controller operations in a first example and a first comparative example. FIG. 3(a)-(d) respectively illustrate individual waveforms of electric power supplied to the heaters 21-24 in the first example; and FIG. 3 (e) illustrates a waveform of the total electric power supplied to the heaters 21-24 in the first example. FIG. 3 (f) illustrates a waveform of the total electric power supplied to the heaters 21-24 in the first comparative example where electric power supply to the heaters 21-24 is started all at the same time. FIG. 3 illustrates control operations implemented in a case where the temperatures at the zones Z1-Z4 have stabilized to steady-state temperatures. It is noted that the temperatures of the zones Z1-Z4 may stabilize to relatively high temperatures after some time passes from starting molding operations, and the temperatures of the zones Z1-Z4 may stabilize to relatively low temperatures after some time passes from shutting down the molding operations. While the molding operations are temporarily stopped, the temperatures of the zones Z1-Z4 are retained at temperatures that are higher than room temperature in order to reduce the restart time. In FIG. 3, the waveforms of the electric power (AC power) supplied to the heaters 21-24 are represented by the product of the effective value of the consumed voltage and the effective value of the consumed current.

After calculating the conduction times t1-t4 of the heaters 21-24, the temperature control part 45 determines whether the sum total of the conduction times t1-t4 (t1+t2+t3+t4) is less than a predetermined cycle length T. As illustrated in FIG. 3, if the sum total is less than the predetermined cycle length T, the temperature control part 45 sets up the timings for switching between cutting off and supplying electric power to the heaters 21-24 in a manner such that the conduction time periods of the heaters 21-24 do not overlap one another. Although not illustrated, a slight interval is provided between adjacent conduction time periods (i.e., between the end time of one conduction time period and the start time of the other conduction time period).

In the first example as illustrated in FIG. 3(a)-(e), the respective conduction time periods of the heaters 21-24 are shifted from one another. Thus, when a current is flown into one of the heaters 21-24 (e.g., heater 21), no current is flown into the other remaining heaters (e.g., heaters 22-24). In this way, the peak value of the total electric power supplied to the heaters 21-24 (peak power) may be reduced compared to the first comparative example (see FIG. 3 (f)) where electric power supply to the heaters 21-24 is started all at the same time.

FIG. 4 illustrates controller operations in a second example and a second comparative example. FIG. 4(a)-(d) respectively illustrate individual waveforms of electric power supplied to the heaters 21-24 in the second example; and FIG. 4 (e) illustrates a waveform of the total electric power supplied to the heaters 21-24 in the second example. FIG. 4 (f) illustrates a waveform of the total electric power supplied to the heaters 21-24 in the second comparative example where conduction of the heaters 21-24 is started all at the same time. As with FIG. 3, FIG. 4 illustrates control operations implemented in a case where the temperatures of the zones Z1-Z4 have stabilized to steady-state temperatures. In FIG. 4, the waveforms of electric power (AC power) supplied to the heaters 21-24 are represented by the product of the effective value of the consumed voltage and the effective value of the consumed current.

When the total sum of the conduction times t1-t4 of the heaters 21-24 (t1+t2+t3+t4) is greater than or equal to the predetermined cycle length T, at least some portions of the conduction times of at least two heaters overlap.

In such a case, the temperature control part 45 selectively determines the heaters that are to have overlapping conduction time periods so that the peak value of the total electric power supplied may be as small as possible. First, the temperature control part 45 determines the magnitude relation of the electric powers W1-W4 supplied to induce conduction of the heaters 21-24. It is noted that when the electric powers W1-W4 are the same, any of the heaters may be selected to have overlapping conduction time periods.

Next, the temperature control part 45 identifies the conduction time t4 of the heater 24 that is supplied the smallest electric power W4 and the conduction time t2 of the heater 22 that is supplied the second smallest electric power W2, and determines whether the sum total of the longer conduction time of the above conduction times (e.g., t2) and the conduction times t1 and t3 of the remaining heaters 21 and 23 (t1+t2+t3) is less than the predetermined cycle length T. As illustrated in FIG. 4, if the above sum total is less than the predetermined cycle length T, the conduction time t4 of the heater 24 that is supplied the smallest electric power W4 and the conduction time t2 of the heater 22 that is supplied the second smallest electric power W2 are arranged to overlap. Then, the timings for switching between cutting off and supplying electric power to the heaters 21-24 are arranged so that the overlapping time periods and the remaining conduction time periods may be shifted from one another and do not overlap.

In the second example as illustrated in FIG. 4(a)-(e), the conduction time periods of the heaters 21-24 are arranged so that the conduction time period of at least one of the heaters (e.g., heater 21) does not overlap with the conduction time period of at least another one of the heaters (e.g., heaters 22-24). In this way, the peak power may be reduced compared to the second comparative example (see FIG. 4 (f)) where conduction of the heaters 21-24 is started all at the same time.

In the above example, the temperature control part 45 adjusts the electric power supplied to the heaters 21-24 so that the peak value of the total electric power supplied to the heaters 21-24 may be less than or equal to a predetermined value.

It is noted that in the example illustrated in FIG. 4, the conduction time periods of two heaters are arranged to overlap. However, in another example, at least some portions of the conduction time periods of three heaters (e.g., heaters 21-23) may be arranged to overlap at a predetermined timing. Even in such an example, the peak power may still be less than the second comparative example so long as the conduction time period of the remaining heater (e.g., heater 24) does not overlap with the conduction time periods of the three heaters (e.g., heaters 21-23). That is, the peak power may be reduced by arranging the conduction time periods of the heaters in a manner such that the conduction time period of at least one of the heaters (e.g., heater 21) does not overlap with the conduction time period of at least another one of the heaters (e.g., heater 24).

Also, in another example, the conduction time period of one heater may overlap with the conduction time period of each of the other heaters so long as the conduction time periods of the other heaters do not all overlap at the same timing. That is, in an embodiment of the present invention, the conduction time periods of the heaters are arranged to avoid creating a time portion in which all the conduction time periods overlap at once at a predetermined timing.

Also, in a case where the peak value of the total electric power would exceed the predetermined value regardless of how the conduction time periods of the heaters 21-24 are arranged, the temperature control part 45 may control an output part such as a buzzer or a display to notify a user.

Also, in the case where the peak value of the total electric power would exceed the predetermined value regardless of how the conduction time periods of the heaters 21-24 are arranged, the temperature control part 45 may arrange the conduction time periods of the heaters 21-24 so that the peak value of the total electric power may be as small as possible, and continue temperature control operations of the cylinder 11.

While the injection molding machine of the present invention has been described above by way of illustrative embodiments, the present invention is not limited to these embodiments, and numerous variations and modifications may be made without departing from the scope of the present invention.

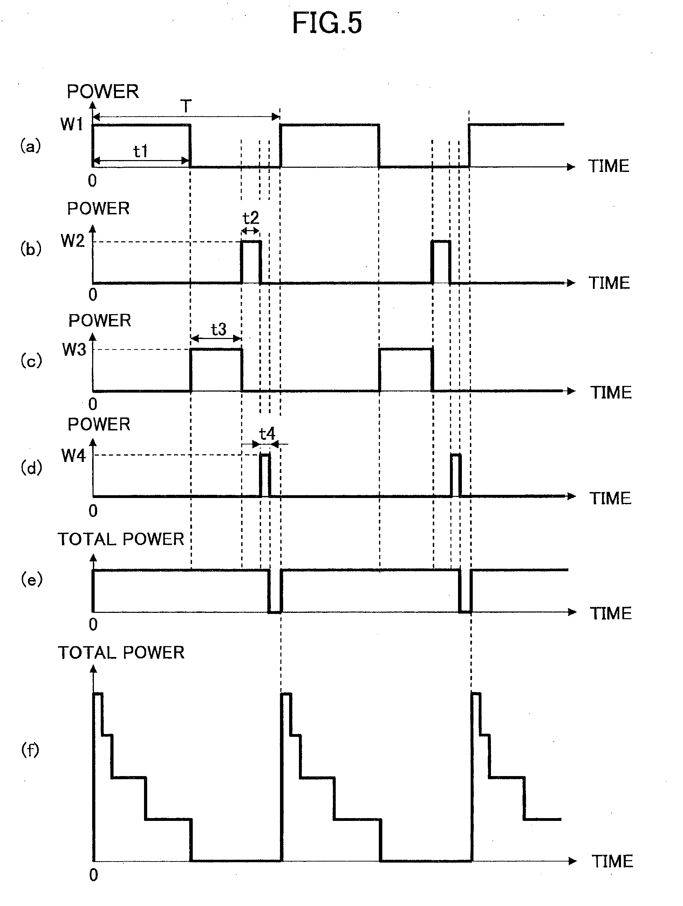

For example, although the electric power supplied to energize the heaters is fixed in the above embodiments, the electric power may also be variable. For example, the switch circuit may comprise an inverter including plural transistors so that the electric power supplied to induce conduction of the heaters may be variable. In this case, the control signal input by the temperature control part to the switch circuit indicates the electric power to be supplied to induce conduction of the heaters in addition to the ratio of the conduction time to the predetermined cycle and the timing for switching between cutting off and supplying the electric power within the predetermined cycle. FIG. 5 illustrates exemplary controller operations in a case where the switch circuit comprises an inverter.

FIG. 5 illustrates controller operations according to a third example and a third comparative example. FIG. 5 (a)-(d) respectively illustrate individual waveforms of electric power supplied to the heaters 21-24 in the third example; and FIG. 5 (e) illustrates a waveform of the total electric power supplied to the heaters 21-24 in the third example. FIG. 5 (f) illustrates a waveform of the total electric power supplied to the heaters 21-24 in the third comparative example where conduction of the heaters 21-24 is started all at the same time. As in FIG. 3, FIG. 5 illustrates control operations implemented in a case where the temperatures of the zones Z1-Z4 have stabilized to steady-state temperatures. In FIG. 5, the waveforms of the electric power (AC power) supplied to the heaters 21-24 are represented by the product of the effective value of the consumed voltage and the effective value of the consumed current.

As illustrated in FIG. 5, in the case where the switch circuits 41-44 comprise inverters, the electric power W1-W4 supplied to induce conduction of the heaters 21-24, the conduction time t1-t4, and the switch timings are set so that the electric power W1-W4 supplied to the heaters 21-24 may be the same value and the conduction time periods of the heaters 21-24 may be shifted from each other so that they do not overlap. In this case, calculation of the electric power W1-W4, calculation of the conduction times t1-t4, and calculation of the switch timings may be performed in any order and may be performed simultaneously as well. By adjusting the electric power W1-W4 supplied to the heaters 21-24 in the above-described manner, the total electric power supplied may be equalized so that the peak power may be reduced further, for example.

Also, it is noted that although operations implemented in a case where the temperatures of the zones have stabilized to steady-state temperatures are described above, the present invention may also be implemented in cases where the temperatures of the zones are rising or falling, for example.

Also, it is noted that although the waveform of the electric power supplied to each of the heaters is arranged into a rectangular wave in the above embodiments, in other embodiments, the electric power supplied to each of the heaters may be arranged to have a waveform with a more gradual change by serially connecting an inductance (e.g., coil) to each of the heaters, for example.

## Claims

1. An injection molding machine (10) comprising:
a cylinder (11) to which a resin material is supplied;
a plurality of heaters (21-24) configured to heat the cylinder (11);
a plurality of temperature sensors (31-34) configured to measure a temperature of the cylinder (11); and
a controller (40) configured to independently control electric power supplied to the heaters (21-24) based on a temperature deviation of the measured temperature of the temperature sensors (31-34) from a target temperature; **characterized by** that
the controller (40) is configured to adjust a peak electric power supplied to the heaters (21-24).

2. The injection molding machine (10) as claimed in claim 1, wherein
the controller (40) is configured to adjust the electric power supplied to the heaters (21-24) so that a peak value of the total electric power supplied to the heaters is less than or equal to a predetermined value.

3. The injection molding machine (10) as claimed in claim 1 or 2, wherein
the controller (40) is configured to determine a timing for switching between cutting off and supplying the electric power to the heaters so that conduction time period of at least one of the heaters does not overlap with another conduction time period of at least another one of the heaters.

4. The injection molding machine (10) as claimed in any one of claims 1-3, wherein
the controller (40) is configured to set, for each of the heaters, a ratio of conduction time to a predetermined cycle based on the temperature deviation of the measured temperature of the temperature sensors from the target temperature.

## Patentansprüche

1. Spritzgießmaschine (10) umfassend:
einen Zylinder (11), dem ein Granulat zugeführt wird;
mehrere Heizelemente (21-24), die gestaltet sind, um den Zylinder (11) zu erhitzen;
mehrere Temperatursensoren (31-34), die gestaltet sind, um die Temperatur des Zylinders (11) zu messen; und
eine Steuerung (40), die gestaltet ist, um eigenständig die elektrische Energie zu steuern, die den Heizelementen (21-24) zugeführt wird, wobei die Grundlage eine Temperaturabweichung der gemessenen Temperatur der Temperatursensoren (31-34) von einer Zieltemperatur ist; **dadurch gekennzeichnet, dass**
die Steuerung (40) gestaltet ist, um eine elektrische Spitzenleistung, die den Heizelementen (21-24) zugeführt wird, zu regeln.

2. Spritzgießmaschine (10) nach Anspruch 1, wobei
die Steuerung (40) dazu konfiguriert ist, die elektrische Energie, die den Heizelementen (21-24) zugeführt wird, derart zu regeln, dass ein Spitzenwert der elektrischen Gesamtleistung, die den Heizelementen zugeführt wird, geringer als oder gleich einem vorbestimmten Wert ist.

3. Spritzgießmaschine (10) nach Anspruch 1 oder 2, wobei
die Steuerung (40) dazu konfiguriert ist, einen Zeitpunkt zum Wechseln zwischen Trennung und Zuführung von elektrischer Energie an die Heizelemente derart zu bestimmen, dass der Zuführungszeitraum von mindestens einem der Heizelemente sich nicht mit einem anderen Zuführungszeitraum von mindestens einem anderen der Heizelemente überschneidet.

4. Spritzgießmaschine (10) nach einem der Ansprüche 1 bis 3, wobei
die Steuerung (40) dazu konfiguriert ist, für jedes der Heizelemente einen Anteil des Zuführungszeitraums, basierend auf der Temperaturabweichung der gemessenen Temperatur der Temperatursensoren und der Zieltemperatur, auf einen vorbestimmten Zyklus festzusetzen.

## Revendications

1. Machine de moulage par injection (10) comprenant :
un cylindre (11) auquel un matériau de résine est fourni ;
une pluralité d'éléments chauffants (21-24) configurés pour chauffer le cylindre (11) ;
une pluralité de capteurs de température (31-34) configurés pour mesurer une température du cylindre (11) ; et
un dispositif de commande (40) configuré pour commander indépendamment une puissance électrique fournie aux éléments chauffants (21-24) sur la base d'une déviation de température de la température mesurée des capteurs de température (31-34) à partir d'une température cible ; **caractérisé en ce que**
le dispositif de commande (40) est configuré pour ajuster une puissance électrique de pointe fournie aux éléments chauffants (21-24).

2. Machine de moulage par injection (10) telle que revendiquée dans la revendication 1, dans laquelle
le dispositif de commande (40) est configuré pour ajuster la puissance électrique fournie aux éléments chauffants (21-24) de sorte qu'une valeur de crête de la puissance électrique totale fournie aux éléments chauffants soit inférieure ou égale à une valeur prédéterminée.

3. Machine de moulage par injection (10) telle que revendiquée dans la revendication 1 ou 2, dans laquelle
le dispositif de commande (40) est configuré pour déterminer une synchronisation pour la commutation entre une coupure et une fourniture de puissance électrique aux éléments chauffants de sorte qu'une durée de conduction d'au moins l'un des éléments chauffants ne se chevauche pas avec une autre durée de conduction d'au moins un autre élément chauffant parmi les éléments chauffants.

4. Machine de moulage par injection (10) telle que revendiquée dans l'une quelconque des revendications 1 à 3, dans laquelle
le dispositif de commande (40) est configuré pour régler, pour chacun des éléments chauffants, un rapport de temps de conduction à un cycle prédéterminé sur la base de la déviation de température de la température mesurée des capteurs de température à partir de la température cible.
